# FASCICULE DE BREVET EUROPEEN

(11) **EP 1 177 380 B1**
(45) Date de publication et mention de la délivrance du brevet: **11.08.2004**
(21) Numéro de dépôt: 99954066.9
(22) Date de dépôt: 05.11.1999
(51) Int. Cl.: F03D 1/04, F03D 9/00

(54) **EOLIENNE A PALES OBLIQUES**
WINDTURBINE MIT VORWÄRTSGENEIGTEN FLÜGELN
WIND MACHINE WITH SLANTED BLADES

(30) Priorité: 12.05.1999 FR 9906076
(43) Date de publication de la demande: 06.02.2002
(73) Titulaire: COMPAGNIE INTERNATIONALE DE TURBINES ATMOSPHERIQUES, 94140 Alfortville (FR)
(72) Inventeur: LE NABOUR, Marcel, F-78600 Maisons Lafitte (FR); HAGOPIAN, Christophe, F-94000 Créteil (FR)
(74) Mandataire: Cabinet HERRBURGER
(86) Numéro de dépôt international: PCT/FR1999/002705
(87) Numéro de publication internationale: WO 2000/070219

(56) Documents cités:
- DE-C- 757 548
- DE-C- 804 090
- US-A- 3 209 156
- US-A- 4 021 135
- US-A- 4 140 433
- US-A- 4 781 523

## Description

La présente invention concerne une éolienne montée sur un mât vertical et comportant une hélice actionnée par le vent et coopérant avec un alternateur pour fournir de l'énergie électrique.

Les spécialistes cherchent depuis longtemps à récupérer l'énergie éolienne qui a l'avantage d'être propre, c'est-à-dire de ne pas engendrer de pollution thermique ou chimique et parallèlement d'être inépuisable.

Ces avantages sont toutefois compensés dans une large mesure par une série d'inconvénients en particulier liés au caractère dispersé et intermittent du vent ; il est en outre bien connu que les « parcs » d'éoliennes consomment beaucoup d'espace et ne fonctionnent pas sans nuisances sonores.

Ces inconvénients font que le marché des éoliennes n'a pas connu ces dernières années l'essor auquel on aurait pu s'attendre, et que les perspectives de développement dans ce domaine sont aujourd'hui très larges.

De manière plus précise, les éoliennes actuellement utilisées sont le plus souvent équipées d'hélices à pales radiales et à axe horizontal analogues à celles permettant la propulsion d'avions, mais en règle générale beaucoup plus grandes. De telles hélices coopèrent classiquement avec des dynamos ou des alternateurs industriels avec des entraînements multiplicateurs de vitesse, ce qui les rend lourdes, coûteuses et de faibles rendements.

On a également déjà proposé des turbines à axe vertical et pales verticales dites « panemones » qui présentent l'avantage d'être moins onéreuses et non tributaires d'organes permettant leur orientation face au vent, mais ont un rendement médiocre.

Dans ces deux systèmes, les pales sont fragiles, et sujettes aux vibrations et résonances, ce qui occasionne des ruptures soit par fatigue soit sous les rafales de vent ; ces organes, mal protégés, peuvent alors être très dangereux.

Un troisième type d'éolienne, déjà décrit sur le plan théorique dans diverses publications, mais non encore utilisé à l'échelle industrielle comporte des pales obliques issues d'un gros moyeu et dont les génératrices sont situées le long d'un tronc de cône face au vent. Ce dernier entraîne les pales en rotation en étant guidé par un ensemble diffuseur constitué par le moyeu, les pales et le cas échéant par un carénage concentrique monté autour des extrémités de celles-ci.

Dans un tel système, l'écoulement de l'air est divergent, ce qui permet d'obtenir une survitesse au droit des pales et augmente l'énergie transmise ; en outre, les pales obliques sont plus longues que des pales radiales de même diamètre utile et sont actives sur toutes cette longueur sans perte aérodynamique d'extrémité, ce qui augmente là encore le rendement.

Des éoliennes de ce type sont à titre d'exemple décrites dans les publications US-4 781 523, DE-804 090 ou encore FR-2 627 812.

Il est par ailleurs à noter que l'on connaît par le document FR-2 763 759 une éolienne équipée d'un générateur électrique dont le rotor est lié à un carénage qui relie entre elles les extrémités des pales, donc au diamètre maximal de celles-ci ; une éolienne de même type était déjà décrite dans le document US-1 352 960 : cette éolienne comporte une jante périphérique portant des aimants inducteurs et constituant un rotor placé en vis-à-vis d'un groupe de trois pôles magnétiques feuilletés embobinés par des conducteurs électriques alimentés en courant de façon à constituer un stator extérieur au rotor.

On a également déjà proposé conformément au document FR-967 895 des machines électriques de grand diamètre à axes verticaux dans lesquelles le rotor inducteur et le stator induit sont disposés soit selon des couronnes plates superposées de même dimension, soit l'un à l'intérieur de l'autre ; dans les deux cas, le rotor est porté et guidé par un chemin de roulement circulaire correspondant à un rail horizontal fixé au sol ou à un pylône et sur lequel roulent des galets liés au rotor.

Les générateurs électriques correspondant à ces enseignements sont très encombrants et lourds et nécessitent par suite des structures de maintien et des pylônes coûteux, le document DE-A-757 548 décrit une éolienne du type du préambule de la revendication 1.

La présente invention a pour objet de remédier à ces inconvénients en proposant une éolienne plus robuste, moins encombrante à puissance égale et moins bruyante que les éoliennes proposées jusqu'à ce jour.

Cette éolienne comporte une hélice actionnée par le vent et équipée de pales portées par un moyeu de gros diamètre, d'axe horizontal.

Selon l'invention, une telle éolienne est caractérisée en ce que le moyeu est prolongé à sa partie amont par un nez aérodynamique recouvrant de préférence les pieds des pales, et les pales sont entourées, à proximité de leurs extrémités, par un carénage circulaire divergent de longueur relativement faible, monté concentriquement au moyeu.

Le rotor est, de préférence, à aimants permanents répartis régulièrement en couronne.

On peut ainsi, de manière particulièrement avantageuse, supprimer les engrenages et organes multiplicateurs qui étaient nécessaires en liaison avec les génératrices du commerce utilisées auparavant et, par suite, disposer d'une éolienne à entraînement direct de grande puissance.

Selon une caractéristique préférentielle de l'invention, le moyeu est équipé à sa partie interne, d'un anneau plat d'axe horizontal coïncidant avec l'axe de rotation et dont les flancs latéraux et/ou le bord périphérique interne ou externe coopèrent avec des groupes de galets de roulement d'axes fixes solidaïres du châssis de façon à définir un rail de maintien et de guidage en rotation.

Les groupes de galets de roulement sont, en règle générale, constitués par des galets métalliques ou revêtus de plastique dur, tels que des galets de convoyeurs ou de chariots d'atelier. Ces galets maintiennent l'anneau plat entre eux en divers points de sa périphérie ; leur répartition est, bien entendu, fonction des efforts nécessaires et ils sont donc plus nombreux en haut et en bas.

Il est cependant à noter que le nombre de groupes de galets est nettement moins important que dans le cas des configurations conformes à l'art antérieur susmentionné, dans lesquelles on utilise un rail non rotatif, ce qui entraîne un gain important pour les masses en rotation.

Selon une autre caractéristique de l'invention, l'anneau plat coopère avec des moyens de freinage du type freins à disques disposés entre les groupes de galets de roulement de façon à éviter tout entraînement de l'hélice à une vitesse trop élevée.

Il est à noter que le moyeu équipé de son nez aérodynamique et le capot situé dans le prolongement de celui-ci sont conformés en une carrosserie fuselée faisant partie intégrante de l'ensemble diffuseur et contribuant à l'optimisation de l'écoulement de l'air au travers de l'hélice.

Conformément à l'invention, le nez du moyeu est, de préférence, équipé d'un orifice d'entrée de vent communiquant, d'une part, avec une capacité d'élimination d'eau et, d'autre part, avec des conduites de guidage d'air refroidissant les circuits de puissance électrique.

Par ailleurs, le capot est, de préférence, prolongé à son extrémité amont contiguë au moyeu rotatif par une gouttière pénétrant à l'intérieur de celui-ci pour recueillir les eaux de pluie.

Selon une autre caractéristique de l'invention, les pales sont des pales hélicoïdales, inclinées vers l'avant d'un angle compris entre 30 et 45° et dimensionnées de façon que le diamètre balayé soit environ double ou quadruple de celui du moyeu ou du capot.

L'expérience a démontré que cette configuration permet d'obtenir une puissance maximale.

Pour que l'éolienne conforme à l'invention soit apte au fonctionnement, il est bien entendu indispensable d'équiper celle-ci de façon connue en elle-même d'organes d'orientation comprenant un servomécanisme couplé à une girouette pour orienter l'hélice dans le sens du vent.

Ce carénage permet de supprimer les turbulences à l'origine du bruit et surtout de créer, en coopération avec le moyeu et les pales de l'hélice, un ensemble diffuseur permettant d'obtenir des conditions optimales d'aspiration de l'air et, par suite, d'entraînement en rotation du rotor.

Selon une autre caractéristique de l'invention, le carénage comporte un bord d'attaque arrondi suivi d'une carène épaisse et d'un bord de fuite mince divergent de préférence soutenu par des goussets répartis dans des plans radiaux.

Cette configuration permet en fait d'obtenir une double aspiration de l'air, à savoir une première aspiration à partir de la partie amont de l'hélice dans le sens du vent, à l'intérieur du carénage et entre les pales et, d'autre part, une seconde aspiration créée à la partie aval de l'hélice, à partir des filets d'air accélérés au niveau du bord de fuite.

Selon l'invention, la carène est, de préférence, constituée par une poutre creuse ayant une section essentiellement triangulaire.

Un tel carénage peut, le cas échéant, être mobile en rotation et porté par les pales.

Celui-ci est cependant de préférence constitué, selon une autre caractéristique de l'invention, par un élément fixe monté sur des bras solidaires du châssis et coopérant à faible jeu avec les extrémités des pales.

Un revêtement abrasif apte à subir un contact accidentel avec les extrémités des pales peut avantageusement être prévu sur la face du carénage située en regard de celles-ci.

Les caractéristiques de l'éolienne qui fait l'objet de l'invention seront décrites plus en détail en se référant aux dessins annexés dans lesquels :
- la figure 1 est une vue en perspective de l'hélice, avec un carénage,
- la figure 2 est une vue en coupe axiale d'un premier mode de réalisation de l'éolienne,
- la figure 3 est une vue partielle de face de ce premier mode,
- la figure 4 est une vue en coupe axiale partielle d'un second mode de réalisation préférentiel de l'invention,
- la figure 5 est une vue partielle depuis l'aval de la figure 4,
- la figure 6 est une vue de détail en coupe axiale de l'éolienne représentée sur la figure 4,
- la figure 7 est un détail de la figure 6 représentant l'anneau plat et un groupe de galets,
- la figure 8 représente en vue en coupe une variante de l'éolienne représentée sur les figures 4 à 7.

Selon les figures, l'éolienne est schématiquement constituée par une hélice 1 montée sur un mât 2 et coopérant de manière à fournir de l'électricité avec un alternateur comportant un rotor 4 et un stator 5.

De manière non représentée sur les figures, le rotor 4 est un rotor à aimants permanents répartis régulièrement en couronne tandis que le stator 5 est un stator à bobines magnétiques adjacent au rotor 4 selon une couronne partielle ou totale.

Par ailleurs, et selon les figures, l'hélice 1 est équipée de pales hélicoïdales 6 inclinées vers l'amont dans le sens V du vent et dont les génératrices sont situées le long d'un tronc de cône.

Ces pales 6 sont portées par un moyeu de gros diamètre 7 d'axe horizontal et sont entourées à proximité de leurs extrémités par un carénage circulaire divergent 8, de longueur relativement faible qui est monté concentriquement au moyeu 7.

Le rotor 4 est fixé au moyeu 7 au niveau du diamètre maximal disponible.

Le stator 5 est quant à lui solidaire d'un capot de révolution 9 qui prolonge le moyeu 7 coaxialement à celui-ci de façon à former une carrosserie fuselée.

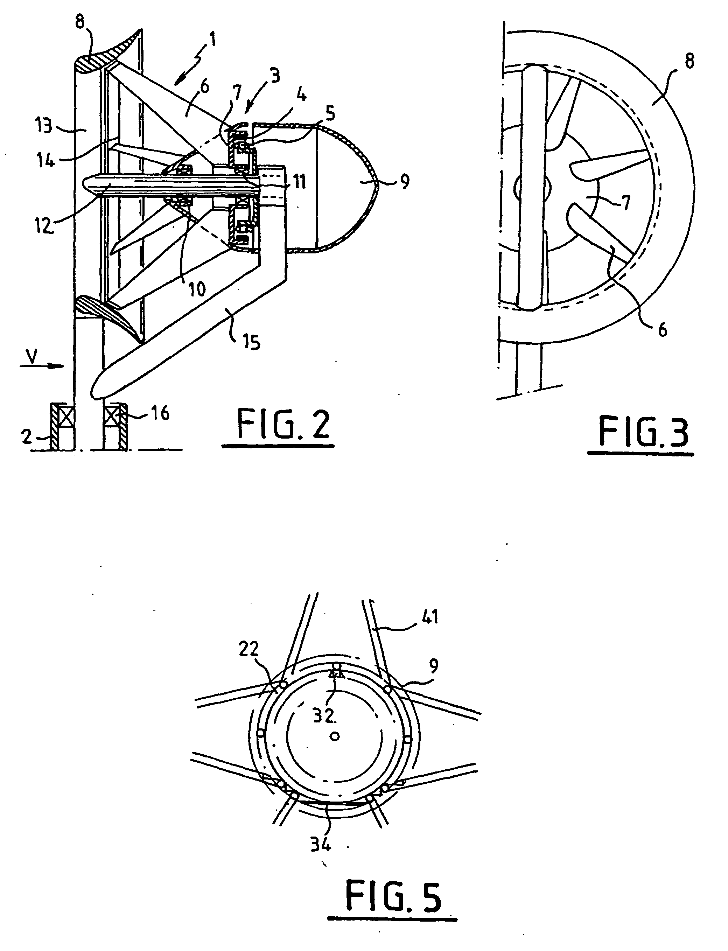

Selon la figure 2, les pales 6 sont fixées au moyeu 7, rotatif autour de roulements 10, 11 portés par un axe fixe 12. Celui-ci est supporté, en amont dans le sens V du vent par une barre diamétrale profilée 13 qui soutien le carénage 8 qui coopère à faible jeu avec les extrémités des pales 6.

Ces dernières sont par ailleurs reliées entre elles par un anneau conique 14.

Conformément à une variante non représentée sur les figures, l'hélice 1 n'est pas équipée d'un carénage et l'anneau conique 14 qui est un peu agrandi en tient lieu pour créer la divergence de l'écoulement en aval.

Par ailleurs, et selon la figure 2 la barre diamétrale 13 porte une console oblique 15 qui contribue à supporter en aval l'axe fixe 12 ainsi que le capot fixe 9 qui prolonge le moyeu rotatif 7.

L'ensemble ainsi constitué est monté orientable à l'extrémité supérieure du mât 2 par l'intermédiaire d'un palier d'axe vertical 16 de façon à permettre de placer l'éolienne face au vent.

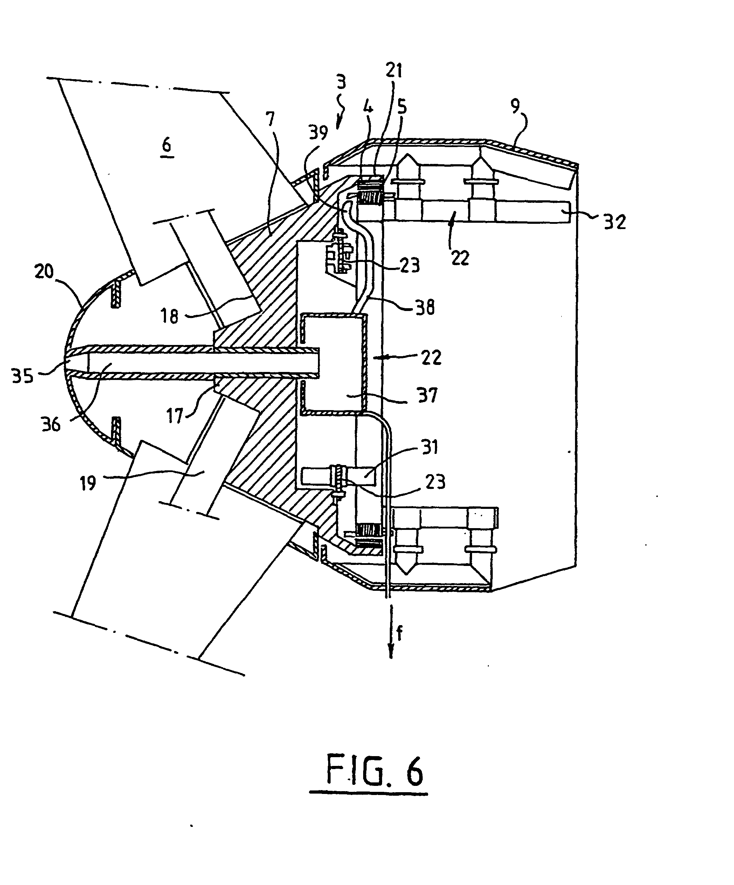

Selon la figure 6, le moyeu 7 est essentiellement constitué par un élément eh forme de cloche 17 équipé d'alvéoles obliques 18 maintenant les extrémités de longerons 19 internes aux pales 6 ainsi fixés au niveau des pieds de celles-ci.

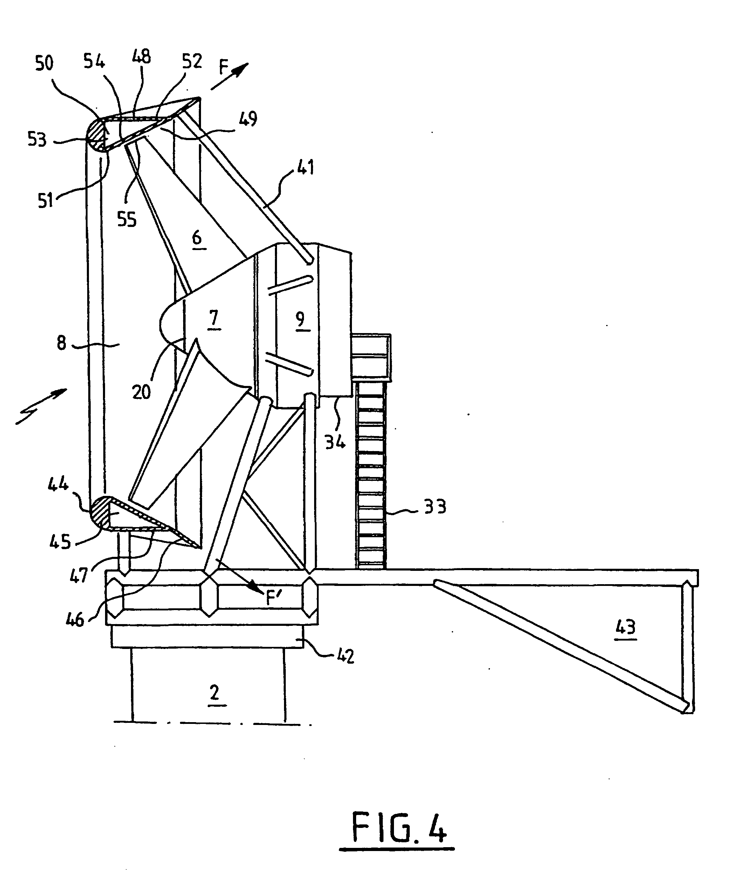

Cet élément 17 est équipé à sa partie amont de plus petit diamètre d'un nez conique 20 de forme aérodynamique situé dans le prolongement de celui-ci et qui est prolongé au niveau de sa partie aval de plus grand diamètre par le capot de révolution fixe 9 solidaire du stator 5 ; l'ensemble constitué par le moyeu 7, le nez aérodynamique 20 ainsi que le capot de révolution 9 forme ainsi une carrosserie fuselée représentée en particulier sur la figure 4.

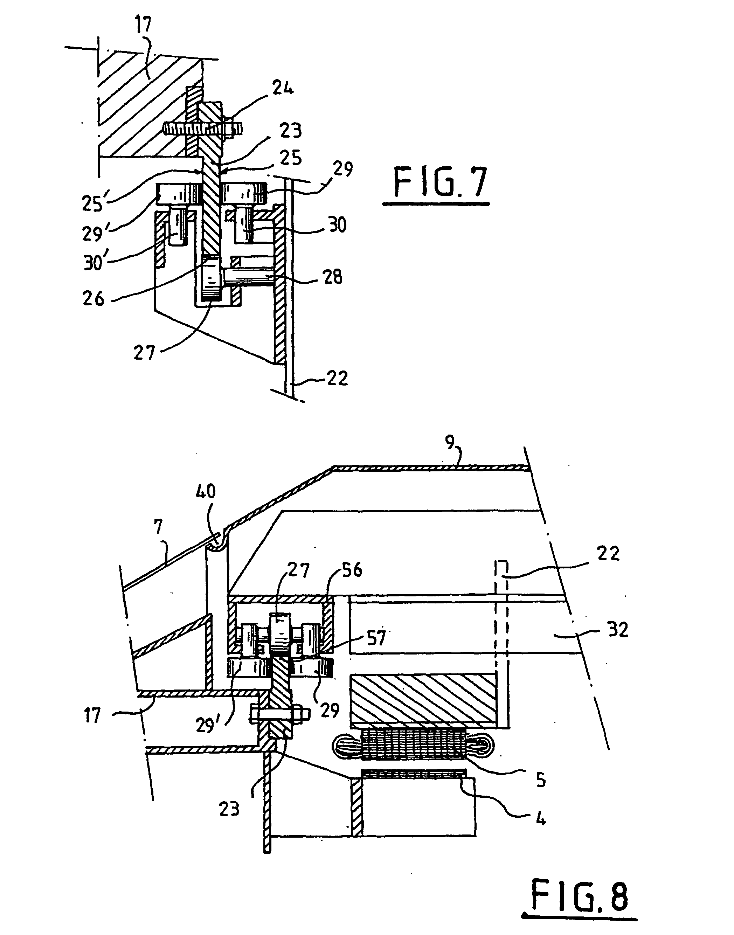

Par ailleurs, et selon les figures 6 et 7, l'élément en forme de cloche 17 est équipé à sa partie aval d'un bord évasé 21 définissant une collerette annulaire dont la périphérie interne porte le rotor 4.

Le stator 5 est quant à lui fixé en regard du rotor 4 et à l'intérieur de celui-ci sur un châssis 22 constituée par des profilés mécano-soudés ; le capot de révolution 9 qui prolonge le moyeu 7 coaxialement à celui-ci est lui aussi fixé au châssis 22.

Le châssis fixe 22 est également relié aux autres organes de l'éolienne tels que par exemple une potence 32 permettant de hisser des matériels de construction ou de maintenance ainsi qu'au mât 2.

Selon la figure 4, une échelle 33 facilite l'accès à la partie interne du capot 9 qui est échancré en 34 pour permettre le hissage de ce matériel.

Selon les figures 6 et 7, l'élément en forme de cloche 17 est en outre équipé à sa partie interne d'un anneau plat 23 fixé à celui-ci au moyen de boulons 24 (figure 7) et définissant un rail de maintien et de guidage du moyeu 7 en rotation.

Cet anneau plat 23 comporte deux flancs latéraux 25, 25' ainsi qu'un bord périphérique interne 26 sur lesquels roulent des groupes de galets de roulement répartis en divers points de sa périphérie.

Plus précisément et selon la figure 7 chacun des groupes de galets de roulement comporte d'une part un galet 27 d'axe horizontal 28 qui roule sur le bord périphérique intérieur 26 de l'anneau 23 et d'autre part deux galets 29, 29' d'axes radiaux 30, 30' qui guident avec un peu de jeu les flancs latéraux respectifs 25, 25' de l'anneau 23 pour le maintenir dans son plan de rotation.

Les axes 28, 30, 30' des galets 27, 29, 29' sont également fixés au châssis 22 qui supporte le stator 5 ainsi que le capot de révolution 9.

Selon la figure 6, l'anneau plat 23 est par ailleurs soumis à des moyens de freinage 31 du type freins à disques qui sont disposés entre les ensembles de galets de roulement 27, 29, 29'.

Selon la figure 6, le nez aérodynamique 20 du moyeu 7 comporte en sa partie axiale un orifice d'entrée d'air 35 relié par l'intermédiaire d'une conduite 36 essentiellement horizontale à une boîte de séparation d'eau 37 ; l'eau peut ainsi être évacuée vers le bas selon la flèche f. La boîte de séparation d'eau 37 communique par ailleurs avec des conduites de refroidissement 38 de façon à amener de l'air frais vers les circuits électriques de l'alternateur 4, 5 par des buses 39.

Comme représenté plus en détail sur la figure 8, l'éolienne est également équipée d'une gouttière 40 qui prolonge le capot de révolution 9 dans l'intérieur du moyeu rotatif 7 de façon à recueillir l'eau de pluie et à l'évacuer vers le bas.

Selon les figures 4 et 5, le carénage 8 est fixé au châssis fixe 22 au moyen de bras 41 inclinés vers l'amont qui traversent le capot de révolution 9.

L'hélice 1 ainsi constituée est montée au sommet du mât 2 par l'intermédiaire d'un roulement d'orientation dont le carter 42 est relié à un servomécanisme couplé à une girouette non représentée portée en aval par une structure 43 de façon à permettre d'orienter l'hélice 1 face au vent.

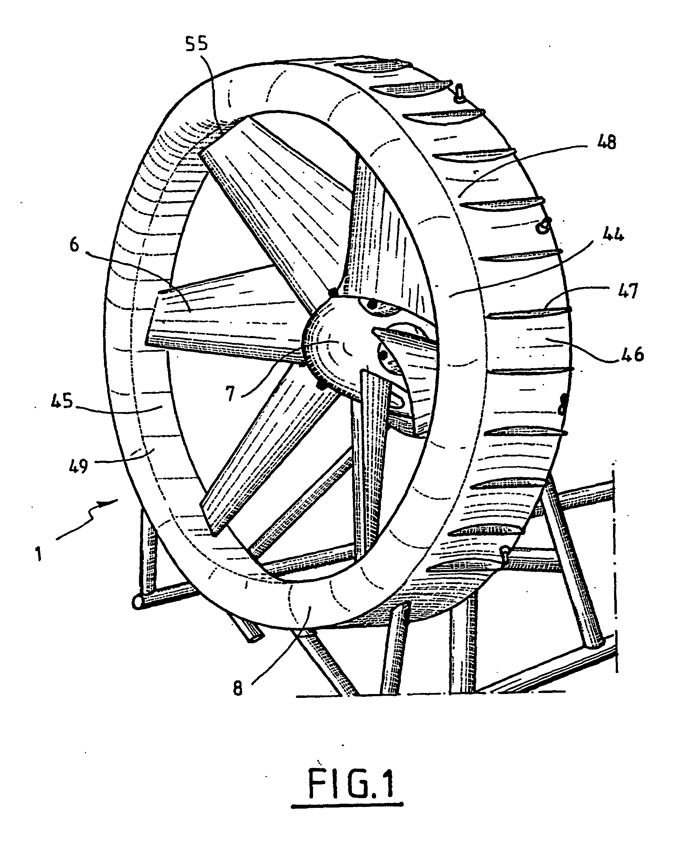

Selon les figures 1 et 4 (sur laquelle il est représenté en coupe), le carénage 8 coopère à faible jeu avec les extrémités 55 des pales 6 ; il comporte un bord d'attaque arrondi 44 suivi d'une carène épaisse 45 et d'un bord de fuite mince divergent 46 soutenu par des goussets 47 répartis dans des plans radiaux.

Cette configuration permet de créer une divergence de l'écoulement d'air en aval selon les flèches F et F'.

Selon la figure 4, la carène 45 est constituée par une poutre creuse ayant une section essentiellement triangulaire. Plus précisément, cette poutre comporte une face extérieure 48 essentiellement rectiligne ainsi qu'une face intérieure arrondie 49.

Par ailleurs, et selon la variante de réalisation représentée sur la figure 8, la disposition du rotor 4 et du stator 5 est inversée, de sorte que le rotor 4 est situé à l'intérieur du stator 5.

Une telle configuration permet de faciliter les opérations de montage et de démontage du stator 5 qui est formé de secteurs démontables individuellement et manipulables au moyen d'un palan non représenté accroché à la potence 32.

Conformément à cette configuration, les galets de roulement 27, 29, 29' de l'anneau plat 23 sont tenus par une chaise 56 fixée au châssis 22, le galet 27 d'axe horizontal étant figuré un peu en arrière du plan de coupe. Il roule ici sur le bord périphérique externe 57 de l'anneau 23.

## Revendications

1. Eolienne montée sur un mât vertical (2) et comportant une hélice (1) actionnée par le vent qui est équipée de pales (6) portées par un moyeu (7) de gros diamètre, d'axe horizontal, ainsi qu'un alternateur coopérant avec l'hélice (1) pour fournir de l'énergie électrique et qui est équipé d'une part d'un rotor magnétique (4) fixé au moyeu (7) de préférence au niveau du diamètre maximal disponible, et d'autre part d'un stator (5) à bobines magnétiques adjacent au rotor (4) et fixé à un châssis fixe (22) solidaire d'un capot de révolution (9) prolongeant le moyeu (7) coaxialement à celui-ci de façon à constituer une carrosserie fuselée dans laquelle est logé l'alternateur,
**caractérisée en ce que**
- le moyeu est prolongé à sa partie amont solidairement en rotation par un nez aérodynamique (20) recouvrant de préférence les pieds des pales (6) et se prolonge à sa partie aval par le capot de révolution fixe (22) solidaire du stator (5), et
- les pales (6) sont entourées, à proximité de leurs extrémités (55) par un carénage circulaire divergent (8) de longueur relativement faible, monté concentriquement au moyeu (7).

2. Eolienne selon la revendication 1,
**caractérisée en ce que**
le moyeu rotatif (7) comporte un élément en forme de cloche (17) équipé du rotor (4) à sa partie aval (21) de plus grand diamètre contiguë au capot (9) et dont la partie amont maintient les pieds des pales.

3. Eolienne selon l'une quelconque des revendications 1 et 2,
**caractérisée en ce que**
le nez aérodynamique (20) est équipé d'un orifice d'entrée de vent (35) communiquant, d'une part, avec une capacité d'élimination d'eau (37) et, d'autre part, avec des conduites (38, 39) de guidage d'air refroidissant les circuits de puissance électrique.

4. Eolienne selon l'une quelconque des revendications 1 à 3,
**caractérisée en ce que**
le moyeu (7) est équipé, à sa partie interne, d'un anneau plat (23) d'axe horizontal coïncidant avec l'axe de rotation et dont les flancs latéraux (25, 25') et/ou le bord périphérique interne (26) ou externe (57) coopèrent avec des groupes de galets de roulement (27, 29, 29') d'axes fixes solidaires du châssis (22) de façon à définir un rail de maintien et de guidage en rotation.

5. Eolienne selon la revendication 4,
**caractérisée en ce que**
l'anneau plat (23) coopère avec des moyens de freinage (31) du type freins à disques disposés entre les groupes de galets (27, 29, 29') .

6. Eolienne selon l'une quelconque des revendications 1 à 5,
**caractérisée en ce que**
le capot (9) est prolongé à son extrémité amont contiguë au moyeu rotatif (7) par une gouttière (40) pénétrant à l'intérieur de celui-ci pour recueillir les eaux de pluie.

7. Eolienne selon l'une quelconque des revendications 1 à 6,
**caractérisé en ce que**
le carénage est porté par les pales.

8. Eolienne selon l'une quelconque des revendications 1 à 6,
**caractérisée en ce que**
le carénage (8) est un élément fixe monté sur des bras (41) solidaires du châssis (22) et coopère à faible jeu avec les extrémités (55) des pales (6).

9. Eolienne selon la revendication 8,
**caractérisée en ce que**
le carénage (8) comporte un bord d'attaque arrondi (44) suivi d'une carène épaisse (45) et d'un bord de fuite mince divergent (46).

10. Eolienne selon l'une quelconque des revendications 1 à 9,
**caractérisée en ce que**
les pales (6) sont des pales hélicoïdales inclinées vers l'amont d'un angle compris entre 30° et 45° et dimensionnées de façon que le diamètre balayé soit environ double ou quadruple de celui du moyeu (7) ou du capot (9).

## Patentansprüche

1. Windturbine, die auf einem vertikalen Mast (2) montiert ist und Folgendes umfasst:
ein vom Wind angetriebenes Flügelrad (1), das mit Flügeln (6) versehen ist, die durch eine Nabe (7) mit großem Durchmesser und horizontaler Achse getragen werden, sowie einen Wechselstromgenerator, der mit dem Flügelrad (1) zusammenarbeitet, um elektrische Energie zu liefern, und der mit Folgendem ausgestattet ist: einerseits mit einem Magnetrotor (4), der an der Nabe (7) vorzugsweise im Bereich des maximalen verfügbaren Durchmessers montiert ist, und andererseits mit einem Stator (5) mit Magnetspulen, der am Rotor (4) anliegt und an einem fixen Rahmen (22) befestigt ist, der mit einer Umlaufabdeckung (9) fest verbunden ist, die die Nabe (7) koaxial zu dieser verlängert, derart, dass ein stromlinienförmiges Gehäuse gebildet wird, in dem der Wechselstromgenerator untergebracht ist, **dadurch gekennzeichnet, dass**
- die Nabe an ihrem vorderen Teil mit einer aerodynamischen Nase (20) drehfest verbunden ist, die vorzugsweise die Füße der Flügel (6) bedeckt und an ihrem hinteren Teil durch die fixe Umlaufabdeckung (22) verlängert wird, die mit dem Stator (5) fest verbunden ist, und
- die Flügel (6) in der Nähe ihrer Enden (55) von einer streuenden kreisförmigen Stromlinienverkleidung (8) von relativ geringer Länge umgeben sind, die konzentrisch zur Nabe (7) montiert ist.

2. Windturbine nach Anspruch 1, **dadurch gekennzeichnet, dass** die drehende Nabe (7) ein glockenförmiges Element (17) umfasst, das an seinem an die Abdeckung (9) angrenzenden hinteren Teil (21) mit dem größten Durchmesser mit dem Rotor (4) ausgestattet ist und dessen vorderer Teil die Füße der Blätter hält.

3. Windturbine nach einem der Ansprüche 1 und 2, **dadurch gekennzeichnet, dass** die aerodynamische Nase (20) mit einer Windeinlassöffnung (35) ausgestattet ist, die einerseits mit einem Wasserableitungsraum (37) und andererseits mit Luftleitungsrohren (38, 39) kommuniziert, die die elektrischen Stromkreise kühlen.

4. Windturbine nach einem der Ansprüche 1 bis 3, **dadurch gekennzeichnet, dass** die Nabe (7) in ihrem inneren Teil mit einem flachen Ring (23) ausgestattet ist, der eine horizontale Achse aufweist, die mit der Drehachse zusammenfällt, und dessen Seitenflanken (25, 25') und/oder innerer (26) oder äußerer Umfangsrand (57) mit Gruppen von Laufrollen (27, 29, 29') mit fixen, mit dem Rahmen (22) fest verbundenen Achsen zusammenarbeiten, derart, dass eine Halte- und Führungsschiene für die Drehung gebildet wird.

5. Windturbine nach Anspruch 4, **dadurch gekennzeichnet, dass** der flache Ring (23) mit Bremsmitteln (31) vom Typ Scheibenbremsen zusammenarbeitet, die zwischen den Gruppen von Laufrollen (27, 29, 29') angeordnet sind.

6. Windturbine nach einem der Ansprüche 1 bis 5, **dadurch gekennzeichnet, dass** die Abdeckung (9) an ihrem an die Drehnabe (7) angrenzenden vorderen Ende durch eine Regenrinne (40) verlängert wird, die in deren Inneres vordringt, um das Regenwasser aufzunehmen.

7. Windturbine nach einem der Ansprüche 1 bis 6, **dadurch gekennzeichnet, dass** die Stromlinienverkleidung durch die Flügel getragen wird.

8. Windturbine nach einem der Ansprüche 1 bis 6, **dadurch gekennzeichnet, dass** die Stromlinienverkleidung (8) ein fixes Element ist, das an Armen (41) montiert ist, die mit dem Rahmen (22) fest verbunden sind, und mit geringem Spiel mit den Enden (55) der Flügel (6) zusammenarbeitet.

9. Windturbine nach Anspruch 8, **dadurch gekennzeichnet, dass** die Stromlinienverkleidung (8) eine abgerundete Eintrittskante (44), gefolgt von einem dicken Stromlinienkörper (45) und einer streuenden dünnen Austrittskante (46), umfasst.

10. Windturbine nach einem der Ansprüche 1 bis 9, **dadurch gekennzeichnet, dass** die Flügel (6) schraubenförmige Flügel sind, die mit einem Winkel zwischen 30° und 45° vorwärtsgeneigt sind und die so bemessen sind, dass der bestrichene Durchmesser annähernd das Doppelte oder Vierfache desjenigen der Nabe (7) oder der Abdeckung (9) ist.

## Claims

1. Wind turbine mounted on a vertical mast (2) incorporating a wind-driven propeller (1) fitted with blades (6) supported by a hub (7) with a large diameter and a horizontal axis, as well as an alternator cooperating with the propeller (1) to supply electrical energy, and which is fitted on the one hand with a magnetic rotor (4) secured to the hub (7), preferably on a level with the maximum available diameter, and on the other hand with a stator (5) with magnetic coils, adjacent to the rotor (4) and secured to a fixed underframe (22), joined to a circular casing (9) extending the hub (7) and coaxial therewith to form a streamlined body in which the alternator is housed,
**characterised in that**
- the hub is extended at its rotationally fixed upstream part by an aerodynamic nose (20) preferably covering the feet of the blades (6) and is extended at its downstream part by the fixed circular casing (22) joined to the stator (5) and
- the blades (6) are surrounded by a divergent circular fairing (8) with a relatively short length in proximity to their ends (55), mounted concentrically with the hub (7).

2. Wind turbine as claimed in claim 1,
**characterised in that**
the rotating hub (7) has a bell-shaped element (17) fitted with the rotor (4) at its downstream part (21) with the bigger diameter contiguous with the casing (9), the upstream part of which retains the feet of the blades.

3. Wind turbine as claimed in any one of claims 1 and 2,
**characterised in that**
the aerodynamic nose (20) has a wind inlet orifice (35) communicating on the one hand with a water drainage compartment (37) and on the other hand with guide ducts (38, 39) for air which cools the electric power circuits.

4. Wind turbine as claimed in any one of claims 1 to 3,
**characterised in that**
the internal part of the hub (7) is fitted with a flat ring (23) with a horizontal axis coinciding with the axis of rotation, the side faces (25, 25') of which and/or the internal (26) or external (57) peripheral edge of which co-operate with groups of running wheels (27, 29, 29') with fixed shafts joined to the underframe (22) so as to define a retaining and guide rail during rotation.

5. Wind turbine as claimed in claim 4,
**characterised in that**
the flat ring (23) co-operates with brake means (31) of the disc brake type disposed between the groups of running wheels (27, 29, 29').

6. Wind turbine as claimed in any one of claims 1 to 5,
**characterised in that**
the casing (9) is extended at its upstream end contiguous with the rotating hub (7) by a gutter (40) penetrating the interior thereof for collecting rain water.

7. Wind turbine as claimed in any one of claims 1 to 6,
**characterised in that**
the fairing is supported by the blades.

8. Wind turbine as claimed in any one of claims 1 to 6,
**characterised in that**
the fairing (8) is a fixed element mounted on arms (41) joined to the underframe (22) and co-operates with the ends (55) of the blades (6) at a slight clearance therefrom.

9. Wind turbine as claimed in claim 8,
**characterised in that**
the fairing (8) has a rounded leading edge (44) followed by a thick body (45) and a thin divergent trailing edge (46).

10. Wind turbine as claimed in any one of claims 1 to 9,
**characterised in that**
the blades (6) are helical blades inclined towards the upstream end at an angle of between 30° and 45° and are dimensioned so that the swept diameter is approximately twice or four times that of the hub (7) or casing (9).
